# EUROPÄISCHE PATENTSCHRIFT

(11) **EP 1 747 943 B1**
(45) Veröffentlichungstag und Bekanntmachung des Hinweises auf die Patenterteilung: **28.04.2010**
(21) Anmeldenummer: 06015417.6
(22) Anmeldetag: 25.07.2006
(51) Int. Cl.: B60R 21/013, B60R 22/00, B60R 22/46

(54) **Verfahren zur Steuerung eines Gurtstraffers und Sicherheitsanordnung mit einem Gurtstraffer**
Method for controlling a belt pretensioner and security arrangement with a pretensioner
Procédé pour contrôler un prétensionneur de ceinture et arrangement de sécurité avec un tel prétensionneur

(30) Priorität: 30.07.2005 DE 102005035863
(43) Veröffentlichungstag der Anmeldung: 31.01.2007
(73) Patentinhaber: GM Global Technology Operations, Inc., Detroit, MI 48265-3000 (US)
(72) Erfinder: Bauer, Klaus, 55545 Bad Kreuznach (DE); Hesse, Simon, 67593 Westhofen (DE); Kettern-Kohler, Horst, 74722 Buchen (DE); Rick, Ulrich, 55595 Roxheim (DE)
(74) Vertreter: Strauss, Peter

(56) Entgegenhaltungen:
- DE-A1- 10 333 990
- DE-A1- 19 636 448
- US-A1- 2003 114 973
- US-A1- 2004 108 697

## Beschreibung

Die vorliegende Erfindung betrifft ein Verfahren zur Steuerung eines Gurtstraffers in einem Kraftfahrzeug, bei dem der Gurtstraffer aktiviert wird, um einen Sicherheitsgurt von einer Normalstellung in eine zweite Stellung zu bringen, in der der Sicherheitsgurt stärker als in der Normalstellung gestrafft ist. Die vorliegende Erfindung betrifft ferner eine Sicherheitsanordnung für ein Kraftfahrzeug mit einem Gurtstraffer.

Aus dem Stand der Technik sind unterschiedliche Sicherheitsanordnungen für Kraftfahrzeuge bekannt. Diese umfassen regelmäßig einen Aufwickelmechanismus zum automatischen Aufwickeln eines Sicherheitsgurtes um eine Gurtspule. Durch das automatische Aufwickeln wird erreicht, dass der angelegte Sicherheitsgurt locker und komfortabel in einer Normalstellung an dem Körper des Fahrzeuginsassen anliegt und bei Nichtgebrauch des Sicherheitsgurtes um die Gurtspule aufgerollt ist. Das Abwickeln des Sicherheitsgurtes ist bei angelegtem Sicherheitsgurt leicht möglich, so dass die Bewegungsfreiheit des Fahrzeuginsassen gewährleistet ist.

Ferner sind bei den bekannten Sicherheitsanordnungen so genannte Gurtstraffer vorgesehen. Die Gurtstraffer bewirken eine Straffung des Sicherheitsgurtes in eine zweite Stellung, um den Fahrzeuginsassen in Richtung der Rückenlehne des Fahrzeugsitzes zu ziehen und die Gurtlose zu entfernen, so dass die Verletzungsgefahr im Falle eines Zusammenpralls des Fahrzeuges mit einem anderen Fahrzeug oder einem Verkehrshindernis verringert ist. Die bekannten Gurtstraffer können dabei in irreversible und reversible Gurtstraffer unterteilt werden. Der irreversible Gurtstraffer wird erst dann aktiviert, wenn es bereits zu einem Unfall, wie beispielsweise einem Zusammenprall mit einem anderen Fahrzeug gekommen ist. Crashsensoren ermitteln den Zusammenprall und entsenden ein entsprechendes Aktivierungssignal an den irreversiblen Gurtstraffer. Die irreversiblen Gurtstraffer können stets nur einmal aktiviert bzw. ausgelöst werden. Die reversiblen Gurtstraffer sollen hingegen mehrmals, auch schnell hintereinander, auf Grund von Signalen ausgelöst werden können, die die Möglichkeit eines bevorstehenden Crashs andeuten. Das heißt, die reversiblen Gurtstraffer sollen immer dann aktiviert bzw. ausgelöst werden können, wenn ein Crash möglich oder wahrscheinlich ist, aber noch nicht stattgefunden hat bzw. festgestellt wurde.

Eine Gefahrensituation wird bei den reversiblen Gurtstraffern nicht durch Crashsensoren, die lediglich den tatsächlich stattgefundenen Crash ermitteln, sondern durch Fahrdynamiksensoren oder Umfeldsensoren ermittelt, die Informationen über den derzeitigen Bewegungszustand bzw. das Umfeld des Kraftfahrzeuges liefern. Hierzu gehört beispielsweise die Ermittlung der Längs-, Quer- und Vertikalbeschleunigung des Kraftfahrzeuges. Sollten diese gemessenen Werte einen Grenzwert überschreiten, so erfolgt die prophylaktische Aktivierung des reversiblen Gurtstraffers. Sollte der Grenzwert wieder unterschritten werden und tatsächlich kein Crash stattgefunden haben, so wird der reversible Gurtstraffer wieder deaktiviert, so dass der Sicherheitsgurt wieder in seine Normalstellung gebracht werden kann, in der dem Fahrzeuginsassen eine größere Bewegungsfreiheit eingeräumt ist. Bei der nächsten kritischen Fahrsituation bzw. Gefahrensituation ist es möglich, den reversiblen Gurtstraffer erneut zu aktivieren.

Die DE 199 61 799 B4 beschreibt ein Sicherheitsgurtsystem mit einem reversiblen Gurtstraffer. Der bekannte reversible Gurtstraffer verfügt über einen elektromotorischen Antrieb, der in Abhängigkeit von einer aus Sensorsignalen abgeleiteten Wahrscheinlichkeit einer Unfallsituation den Sicherheitsgurt in eine Sicherheitszwischenstellung mit einer bestimmten Zugkraft reversibel vorspannt. Die von der nicht näher erläuterten Precrash-Sensorik erfasste kritische Fahrsituation, die zu einer Aktivierung des Gurtstraffers führt, kann beispielsweise ein Schleudern, eine Vollbremsung usw. sein.

Die DE 103 45 726 A1 beschreibt ein Rückhaltesystem zum Zurückhalten eines Insassen in einem Fahrzeug. Das bekannte Rückhaltesystem verfügt über einen reversiblen Gurtstraffer, der über ein Steuergerät gesteuert wird. Das Steuergerät steht mit einer Fahrzeugsituations-Erfassungseinrichtung zum dynamischen Erfassen von Fahrzeugsituationsdaten, wie beispielsweise der Querbeschleunigung des Fahrzeuges, und einer Insassen-Parameter-Erfassungseinrichtung zum dynamischen Erfassen von Insassen-Parameter-Daten, wie beispielsweise dem Gewicht des Insassen, in Verbindung. Der Gurtstraffer wird in Abhängigkeit von den ermittelten Fahrzeugsituationsdaten, an Hand derer festgestellt wird, ob eine Gefahrensituation vorliegt, und den ermittelten Insassen-Parameter-Daten gesteuert.

Die DE 102 30 483 A1 beschreibt ein Verfahren zur Ansteuerung eines zweistufigen irreversiblen Gurtstraffers. Bei dem bekannten Verfahren wird die Längsbeschleunigung des Kraftfahrzeuges erfasst und einer Integration unterzogen, wobei das Integral der Beschleunigung mit einer Auslöseschwelle verglichen wird. Ist diese Auslöseschwelle überschritten, wird eine Gefahrensituation festgestellt und der irreversible Gurtstraffer ausgelöst.

Die DE 103 32 024 A1 beschreibt ein Verfahren zur Ansteuerung eines reversiblen Gurtstraffers zum Lösen einer von einem Beschleunigungssensor aktivierbaren Gurtauszugssperre eines Rückhaltegurts in einem Kraftfahrzeug. Als Lösezeitpunkt für die Gurtauszugssperre ist ein Zeitpunkt festgelegt, zu dem die erfasste Beschleunigung einen Beschleunigungsschwellwert unterschreitet. Der reversible Gurtstraffer selbst wird wiederum auf Grund einer ermittelten Gefahrensituation aktiviert, d.h. bei Feststellung einer Gefahrensituation wird der Gurtstraffer ausgelöst.

Weitere Sicherheitsanordnungen der zuvor beschriebenen Art sind ferner aus den Druckschriften US 2004/108697 A1, US 2003/114973 A1 und DE 10333990 A1 bekannt.

Die bekannten Sicherheitsanordnungen haben sich in der Praxis bewährt, sind jedoch insofern von Nachteil, als dass sie keinen über den normalen Sicherheitsaspekt hinausgehenden Beitrag leisten können. So können die bekannten Sicherheitsanordnungen insbesondere keinen Beitrag zur Erhöhung des Fahrkomforts leisten.

Gegenüber dem vorgenannten Stand der Technik schlägt die DE 19636948 gemäß dem Oberbegriff des Anspruchs 1 bzw. 13 A1 ein Fahrzeuginsassen-Rückhaltesystem vor, das beim Überschreiten einer geringen Grenzgeschwindigkeit einen Gurtstraffer zunächst aktiviert, um den Sicherheitsgurt zu straffen. Anschließend wird der Sicherheitsgurt nach dem Erreichen einer vorgegebenen Gurtspannung und unabhängig davon, ob die Grenzgeschwindigkeit noch immer überschritten ist, automatisch wieder deaktiviert, so dass der Sicherheitsgurt in einem spannungslosen Zustand ist. So ist das bekannte Rückhaltesystem in einen Komfort-Modus versetzt, der dem Fahrzeuginsassen eine große Bewegungsfreiheit einräumt. Zwar kann hierdurch der Komfort erhöht werden, dies ist jedoch noch nicht im ausreichenden Maße verwirklicht.

Der Erfindung liegt daher die Aufgabe zu Grunde, ein Verfahren zur Steuerung eines reversiblen Gurtstraffers anzugeben, das zur weiteren Erhöhung des Fahrkomforts beiträgt. Es ist weiterhin eine Aufgabe der vorliegenden Erfindung, eine Sicherheitsanordnung mit einem Sicherheitsgurt und einem reversiblen Gurtstraffer zu schaffen, die geeignet ist, den Fahrkomfort zu erhöhen.

Diese Aufgabe wird durch die in den Patentansprüchen 1 bzw. 13 angegebenen Merkmale gelöst. Vorteilhafte Ausführungsformen der Erfindung sind Gegenstand der Unteransprüche.

Das erfindungsgemäße Verfahren zur Steuerung eines reversiblen Gurtstraffers in einem Kraftfahrzeug weist den Verfahrensschritt des Aktivierens, d.h. des Auslösens, des Gurtstraffers auf, wenn von einem die Fahrzeugdynamik charakterisierenden Meßwert eine Voraussetzung erfüllt ist, so dass ein Sicherheitsgurt von einer Normalstellung in eine zweite Stellung gebracht wird, in der der Sicherheitsgurt stärker als in der Normalstellung gestrafft ist. Das Aktivieren des Gurtstraffers erfolgt unabhängig von einer Gefahrensituation. Erfindungsgemäß wird der Gurtstraffer deaktiviert, wenn die genannte Voraussetzung nicht mehr erfüllt ist.

Indem der Sicherheitsgurt unabhängig davon, ob eine Gefahrensituation ermittelt wurde oder nicht, in die zweite Stellung gestrafft bzw. gebracht wird, erschließt die erfindungsgemäße Sicherheitsanordnung neue Einsatzgebiete für den reversiblen Gurtstraffer, die über den normalen Einsatz im Rahmen einer Gefahrensituation hinausgehen. Unter einer Gefahrensituation kann beispielsweise das Ansteigen eines die Fahrzeugdynamik charakterisierenden Messwertes, wie z.B. die Querbeschleunigung des Kraftfahrzeuges, über einen Gefahrengrenzwert zu verstehen sein. Gemäß der Erfindung ist dies nicht erforderlich, um den Gurtstraffer zu aktivieren. Vielmehr kann der Messwert unterhalb des Gefahrengrenzwertes verbleiben, wobei der Gurtstraffer unter bestimmten Voraussetzungen auch in ungefährlichen Fahrsituationen ausgelöst wird. Auf diese Weise wird der Gurtstraffer über den Sicherheitsaspekt hinaus auch dafür eingesetzt, dem Fahrzeuginsassen mehr Komfort zu bieten, indem der Fahrzeuginsasse auch in ungefährlichen aber als unangenehm empfundenen Fahrsituationen ohne zu schwanken aufrecht im Fahrzeugsitz positioniert ist.

Das Aktivieren des Gurtstraffers könnte auch manuell erfolgen, jedoch wird der Gurtstraffer in einer bevorzugten Ausführungsform des erfindungsgemäßen Verfahrens automatisch aktiviert. Dies kann beispielsweise auch auf Grundlage von ermittelten Messwerten erfolgen, die die Fahrzeugdynamik charakterisieren, ohne dass die Messwerte oberhalb eines Gefahrengrenzwertes liegen müssen.

In einer besonders bevorzugten Ausführungsform des erfindungsgemäßen Verfahrens wird die Straffkraft des Sidherheitsgurtes nach dem Aktivieren des Gurtstraffers stetig erhöht. Unter der Straffkraft ist hierbei die Kraft zu verstehen, die der Gurtstraffer zum Straffen des Sicherheitsgurtes auf den Sicherheitsgurt ausübt. Ein stetiges Ansteigen der Straffkraft wird von dem Fahrzeuginsassen als wesentlich angenehmer empfunden als ein ruckartiges Straffen des Sicherheitsgurtes, so dass der Fahrkomfort erhöht ist.

In einer vorteilhaften Ausführungsform des erfindungsgemäßen Verfahrens erfolgt das Aktivieren des Gurtstraffers, wenn das Antiblockiersystem (ABS) oder das elektronische Stabilitätsprogramm (ESP) des Kraftfahrzeuges aktiviert wird, zumal das ABS wie auch das ESP sowohl schon bei ungefährlichen Fahrsituationen als auch in Gefahrsituationen regelnd eingreift.

In einer bevorzugten Ausführungsform des erfindungsgemäßen Verfahrens erfolgt das Aktivieren des Gurtstraffers bei aktiviertem ABS oder ESP erst dann, wenn das Antiblockiersystem oder das elektronische Stabilitätsprogramm des Kraftfahrzeuges über eine vorbestimmte Zeitdauer aktiv ist.

Eine bevorzugte Ausführungsform des erfindungsgemäßen Verfahrens umfasst den weiteren Verfahrensschritt des Ermittelns von unterschiedlichen die Fahrzeugdynamik charakterisierenden Werten, wobei das Aktivieren des Gurtstraffers erfolgt, wenn mindestens zwei ermittelte Werte vorbestimmte Komfortgrenzwerte überschreiten, die kleiner als vorbestimmte Gefahrengrenzwerte sind, wobei das Aktivieren des Gurtstraffers ferner auch dann erfolgt, wenn nur einer der ermittelten Werte den Gefahrengrenzwert überschreitet. Bei den unterschiedlichen Werten kann es sich beispielsweise um die Geschwindigkeit einerseits und die Querbeschleunigung andererseits handeln, die gemessen werden, jedoch kommen auch hieraus berechnete Werte, wie beispielsweise der Querbeschleunigungsgradient in Frage. Die entsprechenden Komfortgrenzwerte wären dann ein Geschwindigkeitsgrenzwert, ein Querbeschleunigungsgrenzwert bzw. ein Querbeschleunigungsgradientgrenzwert, die kleiner sind als die zugehörigen Gefahrengrenzwerte. Bei der bevorzugten Ausführungsform wird berücksichtigt, dass zwei unterschiedliche Werte, die zwar unterhalb des Gefahrengrenzwertes liegen aber dennoch gemeinsam erhöht sind, zu einem besonders unangenehmen Fahrempfinden der Fahrzeuginsassen führen können.

In einer vorteilhaften Ausführungsform des erfindungsgemäßen Verfahrens ist ein erster Wert die Geschwindigkeit des Kraftfahrzeuges. Auf diese Weise kann der Gurtstraffer erst ab einem vorbestimmten Geschwindigkeitsgrenzwert bzw. Komfortgrenzwert aktiviert werden, zumal Fahrsituationen bei geringen Geschwindigkeiten des Kraftfahrzeuges meist nicht als unangenehm empfunden werden.

In einer weiteren vorteilhaften Ausführungsform des erfindungsgemäßen Verfahrens ist ein zweiter Wert die Querbeschleunigung, die Längsbeschleunigung, die Vertikalbeschleunigung, der Bremsdruck, der Neigungswinkel, der Querbeschleunigungsgradient, der Längsbeschleunigungsgradient, der Vertikalbeschleunigungsgradient oder der Bremsdruckgradient des Kraftfahrzeuges.

In einer besonders bevorzugten Ausführungsform des erfindungsgemäßen Verfahrens erfolgt das Aktivieren des Gurtstraffers erst dann, wenn der erste und/oder der zweite Wert über eine vorbestimmte Zeitdauer größer als der vorbestimmte Komfortgrenzwert ist.

In einer weiteren vorteilhaften Ausführungsform des erfindungsgemäßen Verfahrens ist ein zweiter Wert die Längsbeschleunigung oder die Querbeschleunigung des Kraftfahrzeuges, wobei ferner der Bremsdruck oder Bremsdruckgradient ermittelt wird und das Aktivieren des Gurtstraffers erst dann erfolgt, wenn der Bremsdruck oder der Bremsdruckgradient kleiner als ein vorbestimmter Bremsgrenzwert ist. Der Bremsgrenzwert ist hierbei ein Sammelbegriff für den Bremsdruckgrenzwert und den Bremsdruckgradientengrenzwert.

In einer besonders bevorzugten Ausführungsform des erfindungsgemäßen Verfahrens werden mindestens zwei Sicherheitsgurte für unterschiedliche Sitzplätze in einem Kraftfahrzeug aktiviert, wobei die Sicherheitsgurte auf unterschiedliche Weise von der Normalstellung in die zweite Stellung gebracht werden. Hierunter ist beispielsweise zu verstehen, dass der zeitliche Verlauf der Straffkraft für die Sicherheitsgurte des Fahrersitzes, des Beifahrersitzes und der Rücksitze unterschiedlich ist. Hierdurch wird der Tatsache Rechnung getragen, dass beispielsweise der Fahrer mehr in das Verkehrsgeschehen eingebunden und somit eher auf unangenehme Fahrsituationen vorbereitet ist als der Beifahrer oder die Fahrzeuginsassen auf den Rücksitzen.

In einer weiteren besonders bevorzugten Ausführungsform des erfindungsgemäßen Verfahrens ist ferner der Verfahrensschritt des Ermittelns einer Gefahrensituation vorgesehen, wobei ein Aktivieren des Gurtstraffers ferner erfolgt, wenn eine Gefahrensituation ermittelt wurde. Eine Gefahrensituation kann beispielsweise - wie bereits oben angedeutet - durch eine Precrash-Sensorik oder eine Umfeldsensorik ermittelt werden, wobei Messwerte ermittelt werden, um diese mit einem Gefahrengrenzwert zu vergleichen. Ist der Gefahrengrenzwert überschritten, wird eine Gefahrensituation festgestellt. Bei dieser Ausführungsform erfüllt das Verfahren also sowohl die Komfort- als auch die Sicherheitsansprüche der Fahrzeuginsassen.

Nachstehend wird die erfindungsgemäße Sicherheitsanordnung zur Durchführung des erfindungsgemäßen Verfahrens beschrieben, wobei bezüglich der Vorteile der Sicherheitsanordnung auf die oben beschriebenen Vorteile des erfindungsgemäßen Verfahrens verwiesen sein soll, die entsprechend gelten.

Die erfindungsgemäße Sicherheitsanordnung ist für ein Kraftfahrzeug konzipiert und weist einen Sicherheitsgurt und einen reversiblen Gurtstraffer auf. Der Sicherheitsgurt kann mit Hilfe des reversiblen Gurtstraffers von einer Normalstellung in eine zweite Stellung gebracht werden, in der der Sicherheitsgurt stärker als in der Normalstellung gestrafft ist, wenn von einem die Fahrzeugdynamik charakterisierenden Meßwert eine Voraussetzung erfüllt ist. Der Gurtstraffer kann unabhängig von einer Gefahrensituation aktiviert werden. Erfindungsgemäß ist der Gurtstraffer deaktiviert, wenn genannte die Voraussetzung nicht mehr erfüllt ist.

In einer bevorzugten Ausführungsform der erfindungsgemäßen Sicherheitsanordnung kann der Gurtstraffer unabhängig von einer Gefahrensituation automatisch aktiviert werden.

In einer weiteren bevorzugten Ausführungsform der erfindungsgemäßen Sicherheitsanordnung wird der Gurtstraffer derart aktiviert, dass die Straffkraft des Sicherheitsgurtes stetig ansteigt.

In einer vorteilhaften Ausführungsform der erfindungsgemäßen Sicherheitsanordnung wirkt der Gurtstraffer derart mit einem Antiblockiersystem oder einem elektronischen Stabilitätsprogramm des Kraftfahrzeuges zusammen, dass der Gurtstraffer aktiviert ist, wenn das Antiblockiersystem oder das elektronische Stabilitätsprogramm aktiv ist.

In einer besonders vorteilhaften Ausführungsform der erfindungsgemäßen Sicherheitsanordnung wirkt der Gurtstraffer derart mit dem Antiblockiersystem oder dem elektronischen Stabilitätsprogramm des Kraftfahrzeuges zusammen, dass der Gurtstraffer bei aktiviertem ABS oder ESP erst dann aktiviert ist, wenn das Antiblockiersystem oder das elektronische Stabilitätsprogramm des Kraftfahrzeuges über eine vorbestimmte Zeitdauer aktiv ist.

In einer bevorzugten Ausführungsform der erfindungsgemäßen Sicherheitsanordnung ist eine Ermittlungseinrichtung zum Ermitteln von unterschiedlichen die Fahrzeugdynamik charakterisierenden Werten und eine Steuereinrichtung zur Steuerung des Gurtstraffers vorgesehen, wobei die Steuereinrichtung derart mit dem Gurtstraffer zusammenwirkt, dass der Gurtstraffer aktiviert ist, wenn mindestens zwei ermittelte Werte vorbestimmte Komfortgrenzwerte überschreiten, die kleiner als vorbestimmte Gefahrengrenzwerte sind, und dass der Gurtstraffer ferner auch dann aktiviert ist, wenn nur einer der ermittelten Werte größer als der Gefahrengrenzwert ist.

In einer vorteilhaften Ausführungsform der erfindungsgemäßen Sicherheitsanordnung ist ein erster Wert die Geschwindigkeit des Kraftfahrzeuges.

In einer weiteren vorteilhaften Ausführungsform der erfindungsgemäßen Sicherheitsanordnung ist ein zweiter Wert die Querbeschleunigung, die Längsbeschleunigung, die Vertikalbeschleunigung, der Bremsdruck, der Neigungswinkel, der Querbeschleunigungsgradient, der Längsbeschleunigungsgradient, der Vertikalbeschleunigungsgradient oder der Bremsdruckgradient des Kraftfahrzeuges.

In einer bevorzugten Ausführungsform der erfindungsgemäßen Sicherheitsanordnung wirkt die Steuereinrichtung derart mit dem Gurtstraffer zusammen, dass der Gurtstraffer erst dann aktiviert ist, wenn der erste und/oder der zweite Wert für eine vorbestimmte Zeitdauer größer als der vorbestimmte Komfortgrenzwert ist.

In einer besonders bevorzugten Ausführungsform der erfindungsgemäßen Sicherheitsanordnung ist ein zweiter Wert die Längsbeschleunigung oder die Querbeschleunigung des Kraftfahrzeuges, wobei ferner der Bremsdruck oder der Bremsdruckgradient durch die Ermittlungseinrichtung ermittelt wird und die Steuereinrichtung derart mit dem Gurtstraffer zusammenwirkt, dass der Gurtstraffer erst dann aktiviert ist, wenn der Bremsdruck oder der Bremsdruckgradient kleiner als ein vorbestimmter Bremsgrenzwert ist.

In einer besonders vorteilhaften Ausführungsform der erfindungsgemäßen Sicherheitsanordnung sind mindestens zwei Sicherheitsgurte für unterschiedliche Sitzplätze in einem Kraftfahrzeug vorgesehen, wobei die Sicherheitsgurte auf unterschiedliche Weise von der Normalstellung in die zweite Stellung gebracht werden können.

In einer weiteren Ausführungsform der erfindungsgemäßen Sicherheitsanordnung wird eine Gefahrensituation vorteilhafterweise mit Hilfe einer Ermittlungseinrichtung ermittelt, wobei die Steuereinrichtung derart mit dem Gurtstraffer zusammenwirkt, dass der Gurtstraffer ferner dann aktiviert ist, wenn eine Gefahrensituation ermittelt wurde.

Die Erfindung wird im Folgenden an Hand einer beispielhaften Ausführungsform unter Bezugnahme auf die zugehörigen Zeichnungen näher erläutert. Es zeigt:
- Fig. 1: eine schematische Darstellung der erfindungsgemäßen Sicherheitsanordnung und
- Fig. 2: ein Diagramm zur Erläuterung des erfindungsgemäßen Verfahrens.

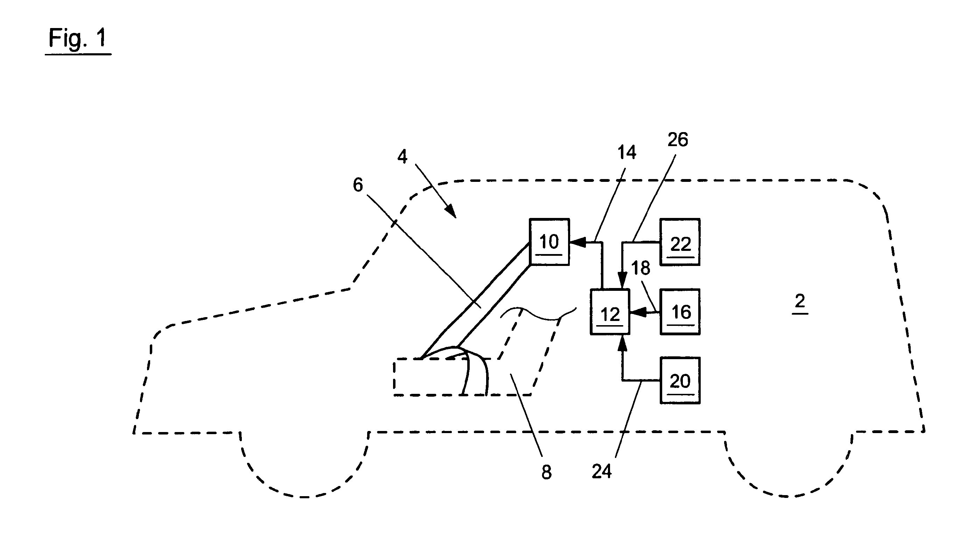

Fig. 1 zeigt eine schematische Darstellung eines Kraftfahrzeuges 2 mit einer Ausführungsform der erfindungsgemäßen Sicherheitsanordnung 4 zur Durchführung des erfindungsgemäßen Verfahrens.

Die Sicherheitsanordnung 4 weist einen Sicherheitsgurt 6 zum Zurückhalten eines nicht dargestellten Fahrers auf, der auf dem Fahrersitz 8 sitzt. Der Sicherheitsgurt 6 steht mit einem reversiblen Gurtstraffer 10 in Wirkverbindung, so dass der Sicherheitsgurt 6 durch Aktivieren des Gurtstraffers 10 von einer Normalstellung in eine zweite Stellung gebracht werden kann, in der der Sicherheitsgurt 6 stärker als in der Normalstellung gestrafft ist. Durch Deaktivieren des Gurtstraffers 10 kann der Sicherheitsgurt 6 von der zweiten Stellung wieder in die Normalstellung zurückkehren. Das Aktivieren des Gurtstraffers 10 erfolgt dabei automatisch und unabhängig von einer Gefahrensituation, wie dies später eingehender erläutert wird. Auch wird der Gurtstraffer 10 derart angesteuert, dass die Straffkraft für den Sicherheitsgurt 6 nach dem Aktivieren stetig ansteigt.

Die Sicherheitsanordnung 4 weist ferner eine Steuereinrichtung 12 zur Steuerung des Gurtstraffers 10 auf, d.h. der Gurtstraffer 10 wird durch die Steuereinrichtung 12 aktiviert bzw. deaktiviert, wie dies an Hand des Pfeils 14 in Fig. 1 angedeutet ist. Neben der Steuereinrichtung 12 ist weiterhin eine Ermittlungseinrichtung 16 vorgesehen, die in der Lage ist, unterschiedliche die Fahrzeugdynamik charakterisierende Werte zu ermitteln, um die Ergebnisse dieser Ermittlungen an die Steuereinrichtung 12 weiterzuleiten, wie dies an Hand des Pfeils 18 angedeutet ist. Zu diesen Werten zählen beispielsweise die Geschwindigkeit, die Querbeschleunigung, die Längsbeschleunigung, die Vertikalbeschleunigung, der Bremsdruck, der Neigungswinkel, der Querbeschleunigungsgradient, der Längsbeschleunigungsgradient, der Vertikalbeschleunigungsgradient und der Bremsdruckgradient des Kraftfahrzeuges.

Die Steuereinrichtung 12 aktiviert den Gurtstraffer 10, wenn mindestens zwei der durch die Ermittlungseinrichtung ermittelten Werte vorbestimmte Komfortgrenzwerte überschreiten, die kleiner als vorbestimmte Gefahrengrenzwerte sind, wobei dies erst dann erfolgt, wenn der erste und/oder zweite Wert für eine vorbestimmte Zeitdauer größer als der vorbestimmte Komfortgrenzwert ist. Ferner wird der Gurtstraffer 10 auch dann durch die Steuereinrichtung 12 aktiviert, wenn nur einer der durch die Ermittlungseinrichtung 16 ermittelten Werte größer als der entsprechende Gefahrengrenzwert ist. Dies wird später eingehender unter Bezugnahme auf das erfindungsgemäße Verfahren erläutert.

In dem Kraftfahrzeug ist ferner ein Antiblockiersystem (ABS) 20 und ein elektronisches Stabilitätsprogramm (ESP) 22 vorgesehen, das mit der Steuereinrichtung 12 in Wirkverbindung steht. Sowohl das Antiblockiersystem 20 als auch das elektronische Stabilitätsprogramm 22 können Daten über deren Betriebszustand an die Steuereinrichtung 12 weiterleiten, wie dies an Hand der Pfeile 24 bzw. 26 dargestellt ist. Ist das Antiblockiersystem 20 oder das elektronische Stabilitätsprogramm 22 aktiv, d.h. die genannten Einrichtungen greifen regelnd oder steuernd in das Fahrverhalten ein, so wird der Gurtstraffer 10 von der Steuereinrichtung 12 aktiviert, sofern das Antiblockiersystem 20 oder das elektronische Stabilitätsprogramm 22 des Kraftfahrzeuges 2 bereits über eine vorbestimmte Zeitdauer aktiv ist. Werden Antiblockiersystem 20 und elektronisches Stabilitätsprogramm 22 inaktiv, so wird der Gurtstraffer 10 durch die Steuereinrichtung 12 wieder deaktiviert.

Nachstehend wird eine Ausführungsform des erfindungsgemäßen Verfahrens erläutert, die der zuvor beschriebenen Sicherheitsanordnung 4 zu Grunde liegt.

Während der Fahrt des Kraftfahrzeuges 2 ermittelt die Ermittlungseinrichtung 16, ob eine Gefahrensituation gegeben ist. Dies kann beispielsweise durch eine Precrash-Sensorik, eine Umfeldsensorik oder durch Ermitteln von aktuellen Werten geschehen, die die Fahrzeugdynamik charakterisieren. Es sei nun angenommen, dass die Ermittlungseinrichtung 16 keinerlei Gefahrensituation ermittelt. Im weiteren Verlaufe der Fahrt wird jedoch das Antiblockiersystem 20 oder das elektronische Stabilitätsprogramm 22 aktiv, wobei jedoch keine Gefahrensituation vorliegt. Auf Grund der Aktivierung des Antiblockiersystems 20 oder des elektronischen Stabilitätsprogramms 22 ergeht ein entsprechendes Signal an die Steuereinrichtung 12, die daraufhin den Gurtstraffer 10 aktiviert, sofern das Antiblockiersystem 20 oder das elektronische Stabilitätsprogramm 22 des Kraftfahrzeuges 2 bereits über eine vorbestimmte Zeitdauer aktiv ist. Somit wird der Gurtstraffer 10 aktiviert, ohne dass eine Gefahrensituation durch die Ermittlungseinrichtung 16 ermittelt wurde. Davon unberührt bleibt die Aktivierung des Gurtstraffers 10, wenn die Ermittlungseinrichtung 16 tatsächlich eine Gefahrensituation ermitteln sollte. Somit erfüllt das Verfahren sowohl Komfortansprüche als auch die herkömmlichen Sicherheitsansprüche der Fahrzeuginsassen.

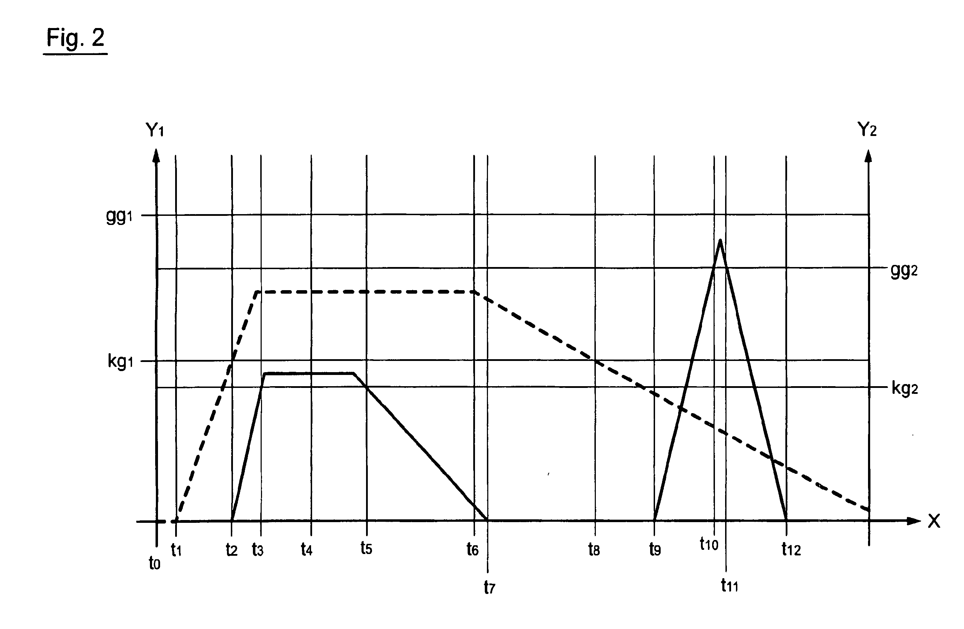

Ein weiterer wesentlicher Aspekt des Verfahrens wird nachstehend unter Bezugnahme auf Fig. 2 beschrieben. Wie bereits unter Bezugnahme auf Fig. 1 erläutert, ermittelt die Ermittlungseinrichtung unterschiedliche die Fahrzeugdynamik charakterisierende Werte, wobei das Verfahren nachfolgend beispielhaft an Hand der Geschwindigkeit und der Querbeschleunigung des Kraftfahrzeuges erläutert werden soll. In Fig. 2 ist daher auf der Achse X die Fahrzeit, auf der Achse Y₁ die Geschwindigkeit und auf der Achse Y₂ die Querbeschleunigung aufgetragen, wobei die gestrichelte Kurve den Verlauf der Geschwindigkeit und die durchgezogene Kurve den Verlauf der Querbeschleunigung zeigt.

Zum Zeitpunkt t₀ startet der Fahrer das Kraftfahrzeug 2, das zum Zeitpunkt t₁ Geschwindigkeit aufnimmt. Das Kraftfahrzeug 2 erfährt zu diesem Zeitpunkt noch keine Querbeschleunigung. Zum Zeitpunkt t₂ steigt die Geschwindigkeit über den vorbestimmten Komfortgrenzwert kg₁ für die Geschwindigkeit, der kleiner als ein vorbestimmter Gefahrengrenzwert gg₁ für die Geschwindigkeit ist. Auch die Querbeschleunigung steigt bei t₂ an, was beispielsweise auf eine Kurvenfahrt zurückzuführen sein kann. Die Querbeschleunigung ist jedoch weiterhin kleiner als der vorbestimmte Komfortgrenzwert kg₂ für die Querbeschleunigung, der kleiner als ein vorbestimmter Gefahrengrenzwert gg₂ für die Querbeschleunigung ist. Zum Zeitpunkt t₃ steigt die Querbeschleunigung dann ebenfalls über den ihr zugeordneten Komfortgrenzwert kg₂. Mit gleich bleibenden Werten fährt das Kraftfahrzeug 2 weiter bis der Zeitpunkt t₄ erreicht ist. Da zum Zeitpunkt t₄ die Geschwindigkeit und die Querbeschleunigung bereits für eine Zeitdauer von t₄ minus t₃ über den jeweils zugeordneten Komfortgrenzwerten kg₁ bzw. kg₂ liegen und diese Zeitdauer einer vorbestimmten Zeitdauer entspricht, ergeht bei t₄ ein entsprechendes Signal von der Ermittlungseinrichtung 16 an die Steuereinrichtung 12, die daraufhin den Gurtstraffer 10 automatisch aktiviert. Hier zeigt sich, dass der Gurtstraffer 10 aktiviert wurde, obwohl weder die Geschwindigkeit noch die Querbeschleunigung den jeweiligen vorbestimmten Gefahrengrenzwert gg₁ bzw. gg₂ überschritten haben. Das Aktivieren erfolgt demzufolge unabhängig von einer Gefahrensituation.

Im weiteren Verlauf der Fahrt sinkt die Querbeschleunigung bei t₅ wieder unter den Komfortgrenzwert kg₂ ab, so dass die Voraussetzung, die zum Aktivieren des Gurtstraffers 10 geführt hat, nicht mehr gegeben ist. Daher ergeht bei t₅ erneut ein entsprechendes Signal von der Ermittlungseinrichtung 16 an die Steuereinrichtung 12, die den Gurtstraffer 10 daraufhin deaktiviert.

Im Zeitpunkt t₆ beginnt die Geschwindigkeit wieder zu sinken, und im Zeitpunkt t₇ ist die Querbeschleunigung wieder auf Null gesunken. Ab dem Zeitpunkt t₈ ist die Geschwindigkeit derart gering, dass diese geringer als der Komfortgrenzwert kg₁ ist. Auch wird die Geschwindigkeit im weiteren Verlauf der Fahrt nicht wieder über den Komfortgrenzwert kg₁ ansteigen. Demgegenüber steigt die Querbeschleunigung zum Zeitpunkt t₉, beispielsweise auf Grund eines Ausweichmanövers, sprunghaft an, so dass sie bei t₁₀ den Gefahrengrenzwert gg₂ überschreitet. Obwohl die Geschwindigkeit weiterhin unterhalb des Komfortgrenzwertes kg₁ liegt, wird der Gurtstraffer 10 auch im Zeitpunkt t₁₀ auf die oben beschriebene Weise aktiviert.

Bei der beschriebenen Ausführungsform des erfindungsgemäßen Verfahrens kann das Aktivieren des Gurtstraffers demzufolge unabhängig von dem Vorhandensein einer Gefahrensituation erfolgen, jedoch wird der Gurtstraffer 10 weiterhin auch auf Grund einer ermittelten Gefahrensituation aktiviert. Zum Zeitpunkt t₁₁ sinkt die Querbeschleunigung wieder unter den Gefahrengrenzwert gg₂, um bei t₁₂ wieder Null zu werden.

In einer alternativen Ausführungsform, die nicht näher dargestellt ist, werden ebenfalls zwei oder mehr die Fahrzeugdynamik charakterisierende Werte ermittelt, wie dies zuvor beschrieben wurde. Als erster Wert könnte beispielsweise die Geschwindigkeit und als zweiter Wert die Längs- oder Querbeschleunigung ermittelt werden. Vor dem Aktivieren des Gurtstraffers muss jedoch noch eine weitere Voraussetzung erfüllt sein. So wird zusätzlich der Bremsdruck oder der Bremsdruckgradient ermittelt, wobei das Aktivieren des Gurtstraffers 10 erst dann erfolgt, wenn der Bremsdruck oder der Bremsdruckgradient kleiner als ein Bremsdruckgrenzwert ist.

Vorstehend wurde die Sicherheitsanordnung 4 und das Verfahren lediglich im Zusammenhang mit einem Sicherheitsgurt 6 beschrieben. Die Steuereinrichtung 12 betreibt in einer bevorzugten Ausführungsform jedoch mehrere Gurtstraffer 10 mit entsprechend zugeordneten Sicherheitsgurten 6, wobei die Sicherheitsgurte für unterschiedliche Sitzplätze innerhalb des Kraftfahrzeuges 2 vorgesehen sind. Die Steuereinrichtung 12 steuert die Gurtstraffer 10 dabei derart, dass die Sicherheitsgurte 6 der verschiedenen Sitzplätze auf unterschiedliche Weise von der Normalstellung in die zweite, gestraffte Stellung gebracht werden. Hierunter ist beispielsweise zu verstehen, dass der zeitliche Verlauf der Straffkraft für die Sicherheitsgurte des Fahrersitzes, des Beifahrersitzes und der Rücksitze unterschiedlich ist. Es erfolgt demzufolge eine sitzplatzbezogene Straffung der Sicherheitsgurte.

### Bezugszeichenliste

- 2: Kraftfahrzeug
- 4: Sicherheitsanordnung
- 6: Sicherheitsgurt
- 8: Fahrersitz
- 10: Gurtstraffer
- 12: Steuereinrichtung
- 14: Pfeil
- 16: Ermittlungseinrichtung
- 18: Pfeil
- 20: Antiblockiersystem (ABS)
- 22: elektronisches Stabilitätsprogramm (ESP)
- 24: Pfeil
- 26: Pfeil

- gg₁: Gefahrengrenzwert (Geschwindigkeit)
- gg₂: Gefahrengrenzwert (Querbeschleunigung)
- kg₁: Komfortgrenzwert (Geschwindigkeit)
- kg₂: Komfortgrenzwert (Querbeschleunigung)
- t₀ - t₁₂: Zeitpunkte
- x: Achse (Zeit)
- Y₁: Achse (Geschwindigkeit)
- Y₂: Achse (Querbeschleunigung)

## Patentansprüche

1. Verfahren zur Steuerung eines reversiblen Gurtstraffers in einem Kraftfahrzeug mit dem Verfahrensschritt Aktivieren des Gurtstraffers, von einem die Fahrzeugdynamik charakterisierenden Meßwert wenn eine Voraussetzung erfüllt ist, so dass ein Sicherheitsgurt von einer Normalstellung in eine zweite Stellung gebracht wird, in der der Sicherheitsgurt stärker als in der Normalstellung gestrafft ist, wobei das Aktivieren des Gurtstraffers unabhängig von einer Gefahrensituation erfolgt
**gekennzeichnet durch** den Verfahrensschritt des Deaktivierens des Gurtstraffers, wenn die die genannte Voraussetzung nicht mehr erfüllt ist

2. Verfahren nach Anspruch 1, **dadurch gekennzeichnet, dass** das Aktivieren des Gurtstraffers automatisch erfolgt.

3. Verfahren nach einem der Ansprüche 1 oder 2, **dadurch gekennzeichnet, dass** die Straffkraft des Sicherheitsgurtes nach dem Aktivieren des Gurtstraffers stetig erhöht wird.

4. Verfahren nach einem der vorangehenden Ansprüche, **dadurch gekennzeichnet, dass** das Aktivieren des Gurtstraffers erfolgt, wenn das Antiblockiersystem oder das elektronische Stabilitätsprogramm des Kraftfahrzeuges aktiviert wird.

5. Verfahren nach Anspruch 4, **dadurch gekennzeichnet, dass** das Aktivieren des Gurtstraffers erst dann erfolgt, wenn das Antiblockiersystem oder das elektronische Stabilitätsprogramm des Kraftfahrzeuges über eine vorbestimmte Zeitdauer aktiv ist.

6. Verfahren nach einem der vorangehenden Ansprüche mit dem weiteren Verfahrensschritt
Ermitteln von unterschiedlichen die Fahrzeugdynamik charakterisierenden Werten, wobei das Aktivieren des Gurtstraffers erfolgt, wenn mindestens zwei ermittelte Werte vorbestimmte Komfortgrenzwerte überschreiten, die kleiner als vorbestimmte Gefahrengrenzwerte sind, wobei das Aktivieren des Gurtstraffers ferner auch dann erfolgt, wenn nur einer der ermittelten Werte den Gefahrengrenzwert überschreitet.

7. Verfahren nach Anspruch 6, **dadurch gekennzeichnet, dass** ein erster Wert die Geschwindigkeit des Kraftfahrzeuges ist.

8. Verfahren nach einem der Ansprüche 6 oder 7, **dadurch gekennzeichnet, dass** ein zweiter Wert die Querbeschleunigung, die Längsbeschleunigung, die Vertikalbeschleunigung, der Bremsdruck, der Neigungswinkel, der Querbeschleunigungsgradient, der Längsbeschleunigungsgradient, der Vertikalbeschleunigungsgradient oder der Bremsdruckgradient des Kraftfahrzeuges ist.

9. Verfahren nach einem der Ansprüche 6 bis 8, **dadurch gekennzeichnet, dass** das Aktivieren des Gurtstraffers erst dann erfolgt, wenn der erste und/oder der zweite Wert über eine vorbestimmte Zeitdauer größer als der vorbestimmte Komfortgrenzwert ist.

10. Verfahren nach einem der Ansprüche 6 oder 7, **dadurch gekennzeichnet, dass** ein zweiter Wert die Längsbeschleunigung oder die Querbeschleunigung des Kraftfahrzeuges ist, wobei ferner der Bremsdruck oder Bremsdruckgradient ermittelt wird und das Aktivieren des Gurtstraffers erst dann erfolgt, wenn der Bremsdruck oder Bremsdruckgradient kleiner als ein vorbestimmter Bremsgrenzwert ist.

11. Verfahren nach einem der vorangehenden Ansprüche, **dadurch gekennzeichnet, dass** mindestens zwei Sicherheitsgurte für unterschiedliche Sitzplätze in einem Kraftfahrzeug aktiviert werden, wobei die Sicherheitsgurte auf unterschiedliche Weise von der Normalstellung in die zweite Stellung gebracht werden.

12. Verfahren nach einem der vorangehenden Ansprüche mit dem weiteren Verfahrensschritt
Ermitteln einer Gefahrensituation, wobei ein Aktivieren des Gurtstraffers ferner erfolgt, wenn eine Gefahrensituation ermittelt wurde.

13. Sicherheitsanordnung für ein Kraftfahrzeug (2) mit einem Sicherheitsgurt (6) und einem reversiblen Gurtstraffer (10), wobei der Sicherheitsgurt (6) mit Hilfe des reversiblen Gurtstraffers (10) von einer Normalstellung in eine zweite Stellung gebracht wird, in der der Sicherheitsgurt (6) stärker als in der Normalstellung gestrafft ist, und der Gurtstraffer (10) unabhängig von einer Gefahrensituation aktiviert wird, wenn von einem die Fahrzeugdynamik charakterisierenden Meßwert eine Voraussetzung erfüllt ist, **dadurch gekennzeichnet, dass** der Gurtstraffer (10) deaktiviert ist, wenn die die genannte Voraussetzung nicht mehr erfüllt ist.

14. Sicherheitsanordnung nach Anspruch 13, **dadurch gekennzeichnet, dass** der Gurtstraffer (10) automatisch aktivierbar ist.

15. Sicherheitsanordnung nach einem der Ansprüche 13 oder 14, **dadurch gekennzeichnet, dass** der Gurtstraffer (10) derart aktivierbar ist, dass die Straffkraft des Sicherheitsgurtes (6) stetig ansteigt.

16. Sicherheitsanordnung nach einem der Ansprüche 13 bis 15, **dadurch gekennzeichnet, dass** der Gurtstraffer (10) derart mit einem Antiblockiersystem (20) oder einem elektronischen Stabilitätsprogramm (22) des Kraftfahrzeuges (2) zusammenwirkt, dass der Gurtstraffer (10) aktiviert ist, wenn das Antiblockiersystem (20) oder das elektronische Stabilitätsprogramm (22) aktiv ist.

17. Sicherheitsanordnung nach Anspruch 16, **dadurch gekennzeichnet, dass** der Gurtstraffer (10) derart mit dem Antiblockiersystem (20) oder dem elektronischen Stabilitätsprogramm (22) des Kraftfahrzeuges (2) zusammenwirkt, dass der Gurtstraffer (10) erst dann aktiviert ist, wenn das Antiblockiersystem (20) oder das elektronische Stabilitätsprogramm (22) des Kraftfahrzeuges (2) über eine vorbestimmte Zeitdauer aktiv ist.

18. Sicherheitsanordnung nach einem der Ansprüche 13 bis 17, **dadurch gekennzeichnet, dass** eine Ermittlungseinrichtung (16) zum Ermitteln von unterschiedlichen die Fahrzeugdynamik charakterisierenden Werten und eine Steuereinrichtung (12) zur Steuerung des Gurtstraffers (10) vorgesehen ist, wobei die Steuereinrichtung (12) derart mit dem Gurtstraffer (10) zusammenwirkt, dass der Gurtstraffer (10) aktiviert ist, wenn mindestens zwei ermittelte Werte vorbestimmte Komfortgrenzwerte (kg₁, kg₂) überschreiten, die kleiner als vorbestimmte Gefahrengrenzwerte (gg₁, gg₂) sind, und dass der Gurtstraffer (10) ferner auch dann aktiviert ist, wenn nur einer der ermittelten Werte größer als der Gefahrengrenzwert (gg₁; gg₂) ist.

19. Sicherheitsanordnung nach Anspruch 18, **dadurch gekennzeichnet, dass** ein erster Wert die Geschwindigkeit des Kraftfahrzeuges (2) ist.

20. Sicherheitsanordnung nach Anspruch 18 oder 19, **dadurch gekennzeichnet, dass** ein zweiter Wert die Querbeschleunigung, die Längsbeschleunigung, die Vertikalbeschleunigung, der Bremsdruck, der Neigungswinkel, der Querbeschleunigungsgradient, der Längsbeschleunigungsgradient, der Vertikalbeschleunigungsgradient oder der Bremsdruckgradient des Kraftfahrzeuges (2) ist.

21. Sicherheitsanordnung nach einem der Ansprüche 18 bis 20, **dadurch gekennzeichnet, dass** die Steuereinrichtung (12) derart mit dem Gurtstraffer (10) zusammenwirkt, dass der Gurtstraffers (10) erst dann aktiviert ist, wenn der erste und/oder der zweite Wert für eine vorbestimmte Zeitdauer größer als der vorbestimmte Komfortgrenzwert (kg₁, kg₂) ist.

22. Sicherheitsanordnung nach einem der Ansprüche 18 oder 19, **dadurch gekennzeichnet, dass** ein zweiter Wert die Längsbeschleunigung oder die Querbeschleunigung des Kraftfahrzeuges (2) ist, wobei ferner der Bremsdruck oder der Bremsdruckgradient durch die Ermittlungseinrichtung (16) erfassbar ist und die Steuereinrichtung (12) derart mit dem Gurtstraffer (10) zusammenwirkt, dass der Gurtstraffer (10) erst dann aktiviert ist, wenn der Bremsdruck oder der Bremsdruckgradient kleiner als ein vorbestimmter Bremsgrenzwert ist.

23. Sicherheitsanordnung nach einem der Ansprüche 13 bis 22, **dadurch gekennzeichnet, dass** mindestens zwei Sicherheitsgurte (6) mit zugehörigen Gurtstraffern (10) für unterschiedliche Sitzplätze in einem Kraftfahrzeug (2) vorgesehen sind, wobei die Sicherheitsgurte (6) auf unterschiedliche Weise von der Normalstellung in die zweite Stellung bringbar sind.

24. Sicherheitsanordnung nach einem der Ansprüche 13 bis 23, **dadurch gekennzeichnet, dass** eine Gefahrensituation mit Hilfe einer Ermittlungseinrichtung (16) ermittelbar ist, wobei eine Steuereinrichtung (12) derart mit dem Gurtstraffer (10) zusammenwirkt, dass der Gurtstraffer (10) ferner dann aktiviert ist, wenn eine Gefahrensituation ermittelt wurde.

## Claims

1. A method for controlling a reversible belt pretensioner in a motor vehicle, comprising the method step of activating the belt pretensioner by a measured value characterizing the vehicle dynamics when a precondition is fulfilled, so that a safety belt is brought from a normal position to a second position in which the safety belt is tensioned more strongly than in the normal position, with the activation of the belt pretensioner occurring independent of any hazardous situation, **characterized by** the method step of deactivating the belt pretensioner when the mentioned precondition is no longer fulfilled.

2. A method according to claim 1, **characterized in that** the activation of the belt pretensioner occurs automatically.

3. A method according to one of the claims 1 or 2, **characterized in that** the tensioning force of the safety belt is increased continually after the activation of the belt pretensioner.

4. A method according to one of the preceding claims, **characterized in that** the activation of the belt pretensioner occurs when the anti-lock braking system or the electronic stability program of the motor vehicle is activated.

5. A method according to claim 4, **characterized in that** the activation of the belt pretensioner occurs only when the anti-lock braking system or the electronic stability program of the motor vehicle is active over a predetermined period of time.

6. A method according to one of the preceding claims, comprising the further method step of determining different values characterizing the vehicle dynamics, with the activation of the belt pretensioner occurring when at least two determined values exceed predetermined comfort threshold values which are smaller than predetermined danger threshold values, with the activation of the belt pretensioner also occurring further when only one of the determined values exceeds the danger threshold value.

7. A method according to claim 6, **characterized in that** a first value is the speed of the motor vehicle.

8. A method according to one of the claims 6 or 7, **characterized in that** a second value is the transverse acceleration, the longitudinal acceleration, the vertical acceleration, the brake pressure, the inclination, the transverse acceleration gradient, the longitudinal acceleration gradient, the vertical acceleration gradient or the brake pressure gradient of the motor vehicle.

9. A method according to one of the claims 6 to 8, **characterized in that** the activation of the belt pretensioner only occurs when the first or the second value is larger over a predetermined period of time than the predetermined comfort threshold value.

10. A method according to one of the claims 6 or 7,
**characterized in that** a second value is the longitudinal acceleration or the transverse acceleration of the motor vehicle, with further the brake pressure or the brake pressure gradient being determined and the activation of the belt pretensioner only occurring when the brake pressure or brake pressure gradient is smaller than a predetermined brake threshold value.

11. A method according to one of the preceding claims,
**characterized in that** at least two safety belts are activated for different seats in a motor vehicle, with the safety belts being brought in different ways from the normal position to the second position.

12. A method according to one of the preceding claims,
comprising the further method step of determining a hazardous situation, with an activation of the belt pretensioner occurring further when a hazardous situation was determined.

13. A safety arrangement for a motor vehicle (2), comprising a safety belt (6) and a reversible belt pretensioner (10), with the safety belt (6) being brought by means of the reversible belt pretensioner (10) from a normal position to a second position in which the safety belt (6) is tensioned more strongly than in the normal position, and the belt pretensioner (10) is activated independent from any danger situation when a precondition is fulfilled by a measured value characterizing the vehicle dynamics, **characterized in that** the belt pretensioner (10) is deactivated when the mentioned precondition is no longer fulfilled.

14. A safety arrangement according to claim 13, **characterized in that** the belt pretensioner (10) can be activated automatically.

15. A safety arrangement according to one of the claims 13 or 14, **characterized in that** the belt pretensioner (10) can be activated in such a way that the tensioning force of the safety belt (6) increases continually.

16. A safety arrangement according to one of the claims 13 to 15, **characterized in that** the belt pretensioner (10) cooperates with an anti-lock braking system (20) or an electronic stability program (22) of the motor vehicle (2) in such a way that the belt pretensioner (10) is activated when the anti-lock braking system (20) or the electronic stability program (22) is active.

17. A safety arrangement according to claim 16, **characterized in that** the belt pretensioner (10) cooperates with the anti-lock braking system (20) or the electronic stability program (22) of the motor vehicle (2) in such a way that the belt pretensioner (10) is only activated when the anti-lock braking system (20) or the electronic stability program (22) is active over a predetermined period of time.

18. A safety arrangement according to one of the claims 13 to 17, **characterized in that** a determining device (16) is provided for determining different values characterizing the vehicle dynamics and a control device (12) for controlling the belt pretensioner (10), with the control device (12) cooperating with the belt pretensioner (10) in such a way that the belt pretensioner (10) is activated when at least two determined values exceed predetermined comfort threshold values (kg₁, kg₂) which are smaller than predetermined danger threshold values (gg₁, gg₂), and the belt pretensioner (10) is further also activated when only one of the determined values is larger than the danger threshold value (gg₁, gg₂).

19. A safety arrangement according to claim 18, **characterized in that** a first value is the speed of the motor value (2).

20. A safety arrangement according to claim 18 or 19,
**characterized in that** a second value is the transverse acceleration, the longitudinal acceleration, the vertical acceleration, the brake pressure, the inclination, the transverse acceleration gradient, the longitudinal acceleration gradient, the vertical acceleration gradient or the brake pressure gradient of the motor vehicle (2).

21. A safety arrangement according to one of the claims 18 to 20, **characterized in that** the control device (12) cooperates with the belt pretensioner (10) in such a way that the belt pretensioner (10) is only activated when the first and/or the second value is larger than the predetermined comfort threshold value (kg₁, kg₂) for a predetermined period of time.

22. A safety arrangement according to one of the claims 18 or 19, **characterized in that** a second value is the longitudinal acceleration or the transverse acceleration of the motor vehicle (2), with further the brake pressure or the brake pressure gradient being determinable by the determining device (16) and the control device (12) cooperating with the belt pretensioner (10) in such a way that the belt pretensioner (10) is activated only when the brake pressure or brake pressure gradient is smaller than a predetermined brake threshold value.

23. A safety arrangement according to one of the claims 13 to 22, **characterized in that** at least two safety belts (6) with associated belt pretensioners (10) are provided for different seats in a motor vehicle (2), wherein the safety belts (6) can be brought in different ways from the normal position to the second position.

24. A safety arrangement according to one of the claims 13 to 23, **characterized in that** a hazardous situation can be determined with the help of a determining device (16), with a control device (12) cooperating with the belt pretensioner (10) in such a way that the belt pretensioner (10) is further activated when a hazardous situation was determined.

## Revendications

1. Procédé pour la commande d'un tendeur de ceinture réversible dans un véhicule à moteur, comprenant l'étape d'activation du tendeur de ceinture par une valeur de mesure caractérisant la dynamique du véhicule quand une condition est remplie, de sorte qu'une ceinture de sécurité est amenée d'une position normale à une deuxième position dans laquelle la ceinture de sécurité est plus fortement tendue que dans la position normale, l'activation du tendeur de ceinture ayant lieu indépendamment d'une situation dangereuse, **caractérisé en ce qu'**il comprend l'étape de procédé de désactivation du tendeur de ceinture quand ladite condition n'est plus remplie.

2. Procédé selon la revendication 1, **caractérisé en ce que** l'activation du tendeur de ceinture est automatique.

3. Procédé selon l'une des revendications 1 ou 2, **caractérisé en ce que** la force de tension de la ceinture de sécurité est constamment augmentée après l'activation du tendeur de ceinture.

4. Procédé selon l'une des revendications précédentes, **caractérisé en ce que** le tendeur de ceinture est activé quand le système antiblocage ou le programme de stabilité électronique du véhicule à moteur est activé.

5. Procédé selon la revendication 4, **caractérisé en ce que** le tendeur de ceinture n'est activé que quand le système antiblocage ou le programme de stabilité électronique du véhicule à moteur est activé au-delà d'une durée prédéterminée.

6. Procédé selon l'une des revendications précédentes, comprenant l'étape de procédé supplémentaire de détermination de différentes valeurs caractérisant la dynamique du véhicule, dans lequel le tendeur de ceinture est activé quand au moins deux valeurs déterminées dépassent des limites de confort prédéterminées qui sont inférieures à des limite de danger prédéterminées, le tendeur de ceinture étant en outre activé même si une seule des valeurs déterminées dépasse la limite de danger.

7. Procédé selon la revendication 6, **caractérisé en ce qu'**une première valeur est la vitesse du véhicule à moteur.

8. Procédé selon l'une des revendications 6 ou 7, **caractérisé en ce qu'**une deuxième valeur est l'accélération transversale, l'accélération longitudinale, l'accélération verticale, la pression de freinage, l'angle d'inclinaison, le gradient d'accélération transversale, le gradient d'accélération longitudinale, le gradient d'accélération verticale ou le gradient de pression de freinage du véhicule à moteur.

9. Procédé selon l'une des revendications 6 à 8, **caractérisé en ce que** le tendeur de ceinture n'est activé que lorsque la première valeur et/ou la deuxième dépassent une limite de confort prédéterminée pendant une durée prédéterminée.

10. Procédé selon l'une des revendications 6 ou 7, **caractérisé en ce qu'**une deuxième valeur est l'accélération longitudinale ou l'accélération transversale du véhicule à moteur, la pression de freinage ou le gradient de pression de freinage étant en outre déterminé et le tendeur de ceinture n'étant activé que lorsque la pression de freinage ou le gradient de pression de freinage est inférieur à une valeur limite de freinage prédéterminée.

11. Procédé selon l'une des revendications précédentes, **caractérisé en ce qu'**au moins deux ceintures de sécurité sont activées pur des places assises différentes dans un véhicule à moteur, les ceintures de sécurité étant amenées différemment de la position normale à la deuxième position.

12. Procédé selon l'une des revendications précédentes, comprenant l'étape de procédé supplémentaire de détermination d'une situation dangereuse, le tendeur de ceinture étant en outre activé quand une situation dangereuse est détectée.

13. Dispositif de sécurité pour un véhicule à moteur (2) avec une ceinture de sécurité (6) et un tendeur de ceinture réversible (10), dans lequel la ceinture de sécurité (6) est amenée à l'aide du tendeur de ceinture réversible (10) d'une position normale à une deuxième position dans laquelle la ceinture de sécurité (6) est plus fortement tendue que dans la position normale, et le tendeur de ceinture (10) est activé indépendamment d'une situation dangereuse si une valeur de mesure caractérisant la dynamique du véhicule remplit une condition préalable, **caractérisé en ce que** le tendeur de ceinture est désactivé (10) si ladite condition préalable n'est plus remplie.

14. Dispositif de sécurité selon la revendication 13, **caractérisé en ce que** le tendeur de ceinture (10) peut être activé automatiquement.

15. Dispositif de sécurité selon l'une des revendications 13 ou 14, **caractérisé en ce que** le tendeur de ceinture (10) peut être activé de telle manière que la force de tension de la ceinture de sécurité (6) augmente de façon continue.

16. Dispositif de sécurité selon l'une des revendications 13 à 15, **caractérisé en ce que** le tendeur de ceinture (10) coopère avec un système antiblocage (20) ou un programme de stabilité électronique (22) du véhicule à moteur (2) de telle manière que le tendeur de ceinture (10) est activé quand le système antiblocage (20) ou le programme de stabilité électronique (22) est actif.

17. Dispositif de sécurité selon la revendication 16, **caractérisé en ce que** le tendeur de ceinture (10) coopère avec le système antiblocage (20) ou le programme de stabilité électronique (22) du véhicule à moteur (2) de telle manière que le tendeur de ceinture (10) n'est activé que quand le système antiblocage (20) ou le programme de stabilité électronique (22) du véhicule à moteur (2) est actif au-delà d'une durée prédéterminée.

18. Dispositif de sécurité selon l'une des revendications 13 à 17, **caractérisé en ce qu'**un dispositif de détermination (16) est prévu pour déterminer différentes valeurs caractérisant la dynamique du véhicule et un dispositif de commande (12) pour la commande du tendeur de ceinture (10), lequel dispositif de commande (12) coopère avec le tendeur de ceinture (10) de telle manière que le tendeur de ceinture (10) est activé quand au moins deux valeurs déterminées dépassent des limites de confort prédéterminées (kg₁, kg₂) qui sont inférieures à des limites de danger prédéterminées (gg₁, gg₂), et **en ce que** le tendeur de ceinture (10) est activé en outre même si une seule des valeurs déterminées dépasse la limite de danger (gg₁, gg₂).

19. Dispositif de sécurité selon la revendication 18, **caractérisé en ce qu'**une première valeur est la vitesse du véhicule à moteur (2).

20. Dispositif de sécurité selon la revendication 18 ou 19, **caractérisé en ce qu'**une deuxième valeur est l'accélération transversale, l'accélération longitudinale, l'accélération verticale, la pression de freinage, l'angle d'inclinaison, le gradient d'accélération transversale, le gradient d'accélération longitudinale, le gradient d'accélération verticale ou le gradient de pression de freinage du véhicule à moteur (2).

21. Dispositif de sécurité selon l'une des revendications 18 à 20, **caractérisé en ce que** le dispositif de commande (12) coopère avec le tendeur de ceinture (10) de telle manière que le tendeur de ceinture (10) n'est activé que quand la première valeur et/ou la deuxième dépassent la limite de confort prédéterminée (kg₁, kg₂) au-delà d'une durée prédéterminée.

22. Dispositif de sécurité selon l'une des revendications 18 ou 19, **caractérisé en ce qu'**une deuxième valeur est l'accélération longitudinale ou l'accélération transversale du véhicule à moteur (2), la pression de freinage ou le gradient de pression de freinage pouvant en outre être détecté par le dispositif de détermination (16) et le dispositif de commande (12) coopérant avec le tendeur de ceinture (10) de telle manière que le tendeur de ceinture (10) n'est activé que quand la pression de freinage ou le gradient de pression de freinage est inférieur à la valeur limite de freinage prédéterminée.

23. Dispositif de sécurité selon l'une des revendications 13 à 22, **caractérisé en ce qu'**au moins deux ceintures de sécurité (6) avec des tendeurs tendeur de ceinture (10) correspondants sont prévus pour différentes places assises dans un véhicule à moteur (2), les ceintures de sécurités (6) pouvant être amenées différemment de la position normale à la deuxième position.

24. Dispositif de sécurité selon l'une des revendications 13 bis 23, **caractérisé en ce qu'**une situation dangereuse peut être détectée à l'aide d'un dispositif de détermination (16), un dispositif de commande (12) coopérant avec le tendeur de ceinture (10) de telle manière que le tendeur de ceinture (10) soit activé en outre quand une situation dangereuse a été détectée.
